# EUROPEAN PATENT APPLICATION

(11) **EP 4 046 966 A1**
(43) Date of publication of application: **24.08.2022**
(21) Application number: 22154214.5
(22) Date of filing: 31.01.2022
(51) Int. Cl.: C01G 53/00, H01M 4/505, H01M 4/525

(54) **POSITIVE ELECTRODE ACTIVE MATERIAL AND LITHIUM ION SECONDARY BATTERY**

(30) Priority: 22.02.2021 JP 2021026266
(71) Applicant: Prime Planet Energy & Solutions, Inc., Chuo-ku Tokyo 103-0022 (JP)
(72) Inventor: YAMAMOTO, Yuji, Tokyo, 103-0022 (JP)
(74) Representative: Kuhnen & Wacker Patent- und Rechtsanwaltsbüro PartG mbB

(57) **Abstract**

Provided is a chlorine-containing positive electrode active material that can impart excellent high-temperature storage characteristic to a lithium ion secondary battery. The positive electrode active material disclosed herein includes 0.1% by mass or more and 3% by mass or less of Cl. Further, in the positive electrode active material disclosed herein, the ratio of a peak intensity of a (003) plane to a peak intensity of a (104) plane in Miller indexes hlk that is determined by powder X-ray diffraction is 0.8 or more and 1.5 or less.

## Description

### BACKGROUND OF THE INVENTION

### 1. Field of the Invention

The present disclosure relates to a positive electrode active material. The present disclosure also relates to a lithium ion secondary battery using the positive electrode active material.

### 2. Description of the Related Art

In recent years, lithium ion secondary batteries have been advantageously used for portable power sources such as personal computers and mobile terminals, and vehicle drive power sources for battery electric vehicles (BEV), hybrid electric vehicles (HEV), plug-in hybrid electric vehicles (PHEV), and the like.

Widespread use of lithium ion secondary batteries created a demand for higher performance thereof. It is known that the performance of a lithium ion secondary battery can be improved by adding chlorine to a positive electrode active material (see, for example, Japanese Patent Application Publications No. H09-312159 and No. 2019-131417).

Specifically, Japanese Patent Application Publication No. H09-312159 indicates that it is possible to leave chlorine on the surface of the positive electrode active material by mixing the positive electrode active material and ammonium chloride and then heat-treating, and that the positive electrode active material on which chlorine remains can improve cycle characteristics of the non-aqueous electrolyte secondary battery. Japanese Patent Application Publication No. 2019-131417 indicates that chlorine can be introduced into a nickel-cobalt-containing hydroxide that is a precursor of a positive electrode active material by using nickel chloride and cobalt chloride in the production of the nickel-cobalt-containing hydroxide, and that by firing such hydroxide together with lithium hydroxide or the like, chlorine can be introduced into the positive electrode active material, the specific surface area of the positive electrode active material can be increased by the introduction of chlorine, and both high output and high capacity of the battery can thus be realized.

### SUMMARY OF THE INVENTION

However, as a result of diligent studies by the present inventor, it was found that, when the abovementioned conventional positive electrode active material including chlorine is used for a lithium ion secondary battery, there arises a problem that the lithium ion secondary battery placed at a high temperature for a long period of time shows a large increase in resistance. That is, a problem that a high-temperature storage characteristic is insufficient is newly found.

Therefore, an object of the present disclosure is to provide a chlorine-containing positive electrode active material capable of imparting excellent high-temperature storage characteristic to a lithium ion secondary battery.

The positive electrode active material disclosed herein includes 0.1% by mass or more and 3% by mass or less of Cl. Further, in the positive electrode active material disclosed herein, the ratio of a peak intensity of a (003) plane to a peak intensity of a (104) plane in Miller indexes hlk that is determined by powder X-ray diffraction is 0.8 or more and 1.5 or less. Such a feature makes it possible to provide a chlorine-containing positive electrode active material capable of imparting excellent high-temperature storage characteristic to a lithium ion secondary battery.

In a desired embodiment of the positive electrode active material disclosed herein, a crystallite size of the (003) plane is 1000 Å or more and 1400 Å or less. Such a feature makes it possible to impart a better high-temperature storage characteristic to a lithium ion secondary battery.

In a desired embodiment of the positive electrode active material disclosed herein, an average particle diameter of the positive electrode active material is 3 µm or more and 5 µm or less. Such a feature makes it possible to impart a better high-temperature storage characteristic to a lithium ion secondary battery.

In a desired embodiment of the positive electrode active material disclosed herein, the positive electrode active material further includes 0.1% by mass or more and 0.5% by mass or less of B. Such a feature makes it possible to impart a better high-temperature storage characteristic to a lithium ion secondary battery.

In a desired embodiment of the positive electrode active material disclosed herein, the positive electrode active material further includes 0.1% by mass or more and 0.5% by mass or less of Na. Such a feature makes it possible to impart a better high-temperature storage characteristic to a lithium ion secondary battery.

According to another aspect, a lithium ion secondary battery disclosed herein includes a positive electrode and a negative electrode. The positive electrode includes the abovementioned positive electrode active material. Such a feature makes it possible to provide a lithium ion secondary battery having excellent high-temperature storage characteristic.

According to another aspect, a method for producing a positive electrode active material disclosed herein is a method for producing the abovementioned positive electrode active material, the method including: a step of preparing a mixture of a hydroxide including a metal element, other than lithium, that constitutes a positive electrode active material, and a lithium source including lithium chloride, and a step of firing the mixture at a temperature of 880°C or higher and 920°C or lower. Such a feature makes it possible to produce a chlorine-containing positive electrode active material that can impart excellent high-temperature storage characteristic to a lithium ion secondary battery.

### BRIEF DESCRIPTION OF THE DRAWINGS

FIG. 1 is a cross-sectional view schematically showing the configuration of a lithium ion secondary battery constructed by using a positive electrode active material according to an embodiment of the present disclosure; and
FIG. 2 is a schematic exploded view showing the configuration of a wound electrode body of a lithium ion secondary battery constructed by using a positive electrode active material according to an embodiment of the present disclosure.

### DESCRIPTION OF THE PREFERRED EMBODIMENTS

Hereinafter, embodiments of the present disclosure will be described with reference to the drawings. Matters not mentioned in the present description but necessary for carrying out the present disclosure can be ascertained as design matters for a person skilled in the art that are based on the related art. The present disclosure can be carried out based on the contents disclosed in the present description and common technical knowledge in the art. Further, in the following drawings, members/parts having the same action are described with the same reference symbols. Further, the dimensional relations (length, width, thickness, etc.) in each drawing do not reflect the actual dimensional relations.

In the present description, the term "secondary battery" refers to a power storage device that can be charged and discharged repeatedly, and is a term that is inclusive of a so-called storage battery and a power storage element such as an electric double layer capacitor. Further, in the present description, the "lithium ion secondary battery" refers to a secondary battery that uses lithium ions as charge carriers and realizes charge/discharge by the transfer of charges accompanying lithium ions between the positive and negative electrodes.

The positive electrode active material according to the present embodiment includes 0.1% by mass or more and 3% by mass or less of chlorine (Cl). In the positive electrode active material according to the present embodiment, the ratio of the peak intensity of the (003) plane to the peak intensity of the (104) plane in Miller indexes hlk that is determined by powder X-ray diffraction [peak intensity of the (003) plane/peak intensity of the (104) plane] is 0.8 or more and 1.5 or less.

The positive electrode active material according to the present embodiment has been accomplished by further studying the positive electrode active material including Cl, and in this positive electrode active material, a Cl-containing protective layer is ensured on the surface of the positive electrode active material, and solid dissolution of Cl into the crystal structure is promoted, thereby strengthening the crystal structure. Specific features of this crystal structure can be represented by the content of Cl within the above-mentioned specific range and by the ratio of the peak intensity of the (003) plane to the peak intensity of the (104) plane within the specific range.

Specifically, a small ratio [peak intensity of the (003) plane/peak intensity of the (104) plane] is an indicator that the solid dissolution of Cl is progressing. Where this peak intensity ratio is too large, it means that the solid solution of Cl has not progressed sufficiently. Accordingly, in the present embodiment, the ratio [peak intensity of the (003) plane/peak intensity of the (104) plane] is 1.5 or less. Therefore, where the peak intensity ratio exceeds 1.5, sufficient high-temperature storage characteristic cannot be obtained.

Meanwhile, where the ratio [peak intensity of the (003) plane/peak intensity of the (104) plane] is too small, the disorder in the crystal structure becomes large. Accordingly, in the present embodiment, the ratio [peak intensity of the (003) plane/peak intensity of the (104) plane] is 0.8 or more. Therefore, where the peak intensity ratio is less than 0.8, sufficient high-temperature storage characteristic cannot be obtained.

The content of Cl is also important in order to obtain a strong crystal structure, and where the content of Cl is in the range of 0.1% by mass or more and 3% by mass or less, a crystal structure is obtained that can impart an excellent high-temperature storage characteristic to a lithium ion secondary battery.

The ratio [peak intensity of (003) plane/peak intensity of (104) plane] can be determined by measuring the peak intensity of the (003) plane and the peak intensity of the (104) plane for powder of the positive electrode active material by a powder X-ray diffraction method using a known X-ray diffraction (XRD) apparatus, and by calculating the ratio thereof. The content of Cl can also be determined by an inductively coupled plasma (ICP) emission spectroscopic analysis or ion chromatography (IC) analysis.

The crystal structure of the positive electrode active material according to the present embodiment is typically a layered rock salt type crystal structure. Examples of the positive electrode active material having a layered rock salt type crystal structure include a lithium composite oxide represented by a general formula LiMO₂ (M is one or two or more metal elements other than Li). As the lithium composite oxide, a lithium transition metal oxide including at least one of Ni, Co, and Mn as the above M is desirable, and specific examples thereof include a lithium-nickel-based composite oxide, a lithium-cobalt-based composite oxide, a lithium-manganese-based composite oxide, a lithium-nickel-cobalt-manganese-based composite oxide, a lithium-nickel-cobalt-aluminum-based composite oxide, and a lithium-iron-nickel-manganese-based composite oxide.

It should be noted that in the present description, the "lithium-nickel-cobalt-manganese-based composite oxide" is inclusive of an oxide including Li, Ni, Co, Mn, and O as constituent elements and also of an oxide including one or two or more additive elements other that these constituent elements. Examples of such additive elements include transition metal elements such as Mg, Ca, Al, Ti, V, Cr, Y, Zr, Nb, Mo, Hf, Ta, W, Na, Fe, Zn, and Sn; main group metal elements; and the like in addition to Cl contained in the present embodiment. Further, the additive element may be a metalloid element such as B, C, Si, and P or a non-metal element such as S, F, Br, and I. This also applies to the above-mentioned lithium-nickel-based composite oxide, lithium-cobalt-based composite oxide, lithium-manganese-based composite oxide, lithium-nickel-cobalt-aluminum-based composite oxide, lithium-iron-nickel-manganese-based composite oxide, and the like.

As the positive electrode active material according to the present embodiment, lithium-nickel-cobalt-manganese-based composite oxides are desirable. Of these, an oxide in which the content of nickel with respect to metal elements other than lithium is 33 mol% or more and 80 mol% or less (in particular, 45 mol% or more and 55 mol% or less) is desirable.

In the positive electrode active material according to the present embodiment, the crystallite size of the (003) plane is not particularly limited. If the crystallite size is too small, the degree of grain growth is small, and therefore the effect of improving the high-temperature storage characteristic tends to be small. Therefore, from the viewpoint of higher effect of improving the high-temperature storage characteristic, the crystallite size is desirably 800 Å or more, more desirably 900 Å or more, and further desirably 1000 Å or more. Meanwhile, where the crystallite size is too large, it tends to be difficult to relieve stress during expansion/contraction of the positive electrode active material, and the effect of improving the high-temperature storage characteristic tends to be small. Therefore, from the viewpoint of a higher effect of improving the high-temperature storage characteristic, the crystallite size is desirably 1500 Å or less, and more desirably 1400 Å or less.

It should be noted that the crystallite size of the (003) plane can be determined, for example, by performing powder X-ray diffraction measurement on the powder of the positive electrode active material by using a known X-ray diffraction (XRD) apparatus. Specifically, for example, the crystallite size can be obtained by using the full width at half maximum (half-value width) of the (003) plane, a 2θ value, and a Scherrer equation. When the positive electrode active material is already included in the positive electrode, only the positive electrode active material may be isolated according to a known method and used as a measurement sample.

The positive electrode active material may be composed of primary particles or may be composed of secondary particles in which the primary particles are aggregated. The average particle diameter of the positive electrode active material is not particularly limited, and is, for example, 0.05 µm or more and 20 µm or less. Where the average particle diameter is small, the number of Cl solid solution sites increases and the effect of improving the high-temperature storage characteristic becomes higher. However, where the average particle diameter is too small, the number of reaction sites on the surface increases too much, many side reactions occur and the effect of improving the high-temperature storage characteristic tends to be small. Therefore, from the viewpoint of higher effect of improving the high-temperature storage characteristic, the average particle diameter of the positive electrode active material is desirably 2 µm or more, and more desirably 3 µm or more. Meanwhile, where the average particle diameter is too large, a Cl solid solution portion in the outer peripheral section where the reaction activity is high decreases, and the effect of improving the high-temperature storage characteristic tends to decrease. Therefore, from the viewpoint of higher effect of improving the high-temperature storage characteristic, the average particle diameter of the positive electrode active material is desirably 10 µm or less, and more desirably 7 µm or less, and further desirably 5 µm or less.

It should be noted that the average particle diameter can be obtained by taking scanning electron microscope (SEM) images of the particles of the positive electrode active material and calculating the average value of particle diameter of 100 arbitrarily selected particles. When the particles are non-spherical, the particle diameter of the particles can be obtained by determining the maximum diameter (major diameter L) of the particles in the scanning electron micrograph, then determining the diameter (minor diameter W) that is the largest among the diameters orthogonal to the major diameter L, and calculating the average value of the major diameter L and the minor diameter W (that is, (major diameter L + minor diameter W)/2). Further, the particle diameter of the particles is the secondary particle diameter when the particles are secondary particles.

As one of the desired modes of the present embodiment, the positive electrode active material further includes boron (B) as an additive element. The addition of Cl suppresses grain growth, but the addition of B can promote grain growth and enhance the solid solution effect of Cl, and can also suppress the occurrence of side reactions due to Cl. As a result, a higher effect of improving the high-temperature storage characteristic can be obtained. From the viewpoint of fully exerting the effect of adding B, the content of B in the positive electrode active material is desirably 0.1% by mass or more. Meanwhile, where the content of B added is too large, side reactions are likely to occur. Therefore, the content of B in the positive electrode active material is desirably 1.0% by mass or less, and more desirably 0.5% by mass or less.

As one of the desired modes of the present embodiment, the positive electrode active material further includes sodium (Na) as an additive element. The addition of Cl suppresses grain growth, but the addition of Na can promote grain growth and enhance the solid solution effect of Cl, and can also suppress the occurrence of side reactions due to Cl. As a result, a higher effect of improving the high-temperature storage characteristic can be obtained. From the viewpoint of fully exerting the effect of adding Na, the content of Na in the positive electrode active material is desirably 0.1% by mass or more. Meanwhile, where the content of Na added is too large, side reactions are likely to occur. Therefore, the content of Na in the positive electrode active material is desirably 1.0% by mass or less, more desirably 0.5% by mass or less. The positive electrode active material desirably further includes both B and Na as additive elements in addition to Cl.

As described above, with the positive electrode active material according to the present embodiment, a Cl-containing protective layer is ensured on the surface of the positive electrode active material, and at the same time, the crystal structure is strengthened by promoting the solid solution of Cl into the crystal structure. Such a positive electrode active material can be obtained by using lithium chloride as a chlorine source and firing at a temperature higher than the firing temperature adopted in the production of a conventional positive electrode active material.

Therefore, a desired method for producing the positive electrode active material according to the present embodiment includes a step of preparing a mixture of a hydroxide including a metal element, other than lithium, that constitutes a positive electrode active material, and a lithium source including lithium chloride (mixture preparation step), and a step of firing the mixture at a temperature of 880°C or higher and 920°C or lower (firing step). The positive electrode active material according to the present embodiment is not limited to the one produced by the desired production method, and may be produced by another method.

The mixture preparation step will be explained in detail. A hydroxide including a metal element, other than lithium, that will constitute a positive electrode active material is a precursor of the positive electrode active material, and where the positive electrode active material is represented by the general formula LiMO₂ (M has the same meaning as described above), the hydroxide can be represented by a general formula M(OH)₂ (M has the same meaning as described above). Such hydroxide can be synthesized and prepared according to a known method (for example, a crystallization method).

The average particle diameter of the hydroxide is not particularly limited, but the desirable average particle diameter is the same as that of the positive electrode active material. Therefore, the average particle diameter of the hydroxide is desirably 2 µm or more, and more desirably 3 µm or more. Meanwhile, the average particle diameter of the hydroxide is desirably 10 µm or less, more desirably 7 µm or less, and further desirably 5 µm or less. The average particle diameter of the hydroxide can be determined by the same method as the average particle diameter of the positive electrode active material described above.

Meanwhile, in the desired production method, lithium chloride (LiCl) is used as the lithium source and also serves as a chlorine source. Here, the content of chlorine in the positive electrode active material can be adjusted by the amount of lithium chloride used. Therefore, in order to adjust the content of chlorine in the positive electrode active material, usually, a lithium compound used as a conventional lithium source (for example, lithium carbonate, lithium hydroxide, lithium nitrate, lithium acetate, lithium oxalate, and the like) is used in addition to lithium chloride as the lithium source.

In the mixture, the amount of lithium chloride is not particularly limited as long as the content of Cl in the positive electrode active material will be 0.1% by mass or more and 3% by mass or less. In the firing step, usually only a part of Cl of lithium chloride is introduced into the positive electrode active material. That is, usually, only the amount less than the chlorine amount used is introduced into the positive electrode active material. Therefore, the amount of lithium chloride may be determined so that the amount of chlorine is larger than the desired content of Cl in the positive electrode active material. Further, where the firing temperature is high, the amount of chlorine introduced is low, and the amount of lithium chloride may be determined in consideration of this point. As a guide, when lithium chloride is mixed in an amount of 1% by mass or more and 24% by mass or less with respect to the total amount of hydroxide and lithium source, it is easy to make the content of Cl in the positive electrode active material to be 0.1% by mass or more and 3% by mass or less.

Here, when it is desired to add boron (B) to the positive electrode active material, a boron source (for example, boric acid (H₃BO₃) or the like) is further mixed. When it is desired to add sodium (Na) to the positive electrode active material, a sodium source (for example, sodium hydroxide, sodium carbonate, sodium acetate, or the like) is further mixed. When a boron source and a sodium source are mixed, the solid dissolution of Cl is promoted, so that the amount of lithium chloride used can be reduced.

The hydroxide, lithium source, and arbitrary additive element source (boron source, sodium source, and the like) can be mixed according to a known method. Mixing can be performed using, for example, a known stirring device/mixing device such as a shaker mixer, a Loedige mixer, a Julia mixer, a V-type mixer, a ball mill, and the like. By such mixing, a mixture can be prepared.

Next, the firing step will be described. In the production of the conventional positive electrode active material, the firing temperature is usually about 650°C to 850°C as described in Japanese Patent Application Publication No. 2019-131417. By contrast, in the desired production method, the firing temperature is in the range of 880°C or higher and 920°C or lower, which is higher than the conventional one. By adopting such a firing temperature, the solid dissolution of Cl can be appropriately advanced, and the peak intensity ratio of the (003) plane/(104) plane can be adjusted to 0.8 or more and 1.5 or less.

The firing time is not particularly limited, may be selected, as appropriate, according to the firing temperature, and may be the same as the conventional one (usually 1 hour or more). The firing time is desirably 3 hours or more and 72 hours or less, and more desirably 5 hours or more and 50 hours or less. Here, since the crystallite size of the (003) plane increases with the firing time, the crystallite size of the (003) plane can be easily adjusted by the firing time. The crystallite size can also be adjusted by the firing temperature.

The firing atmosphere is not particularly limited, and may be an air atmosphere, an oxygen atmosphere, an atmosphere of an inert gas such as helium or argon, and is desirably an oxygen atmosphere.

The mixture can be fired according to a known method. The firing can be performed, for example, by using a continuous or batch type electric furnace or the like. By firing, the positive electrode active material according to the present embodiment can be obtained.

When a lithium ion secondary battery is constructed using the positive electrode active material according to the present embodiment, an increase in resistance occurring when the lithium ion secondary battery is placed at a high temperature for a long period of time is suppressed, thereby ensuring an excellent high-temperature storage characteristic. Therefore, the positive electrode active material according to the present embodiment is desirably the positive electrode active material of a lithium ion secondary battery.

Therefore, from another aspect, a lithium ion secondary battery disclosed herein includes a positive electrode and a negative electrode. The positive electrode includes the positive electrode active material according to the present embodiment described above. Hereinafter, a specific configuration example of a lithium ion secondary battery will be described with reference to the drawings.

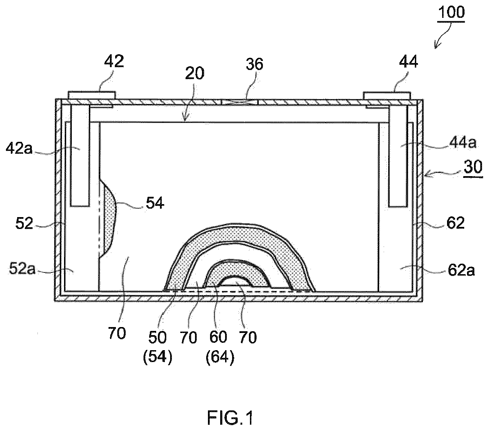

A lithium ion secondary battery 100 shown in FIG. 1 is a sealed battery constructed by accommodating a flat wound electrode body 20 and a non-aqueous electrolyte (not shown) in a flat square battery case (that is, an outer container) 30. The battery case 30 is provided with a positive electrode terminal 42 and a negative electrode terminal 44 for external connection, and a thin-walled safety valve 36 set to release an internal pressure of the battery case 30 when the internal pressure increases to a prescribed level, or higher. Further, the battery case 30 is provided with an injection port (not shown) for injecting a non-aqueous electrolyte 80. The positive electrode terminal 42 is electrically connected to the positive electrode current collecting plate 42a. The negative electrode terminal 44 is electrically connected to the negative electrode current collecting plate 44a. As the material of the battery case 30, for example, a lightweight metal material having good thermal conductivity such as aluminum is used.

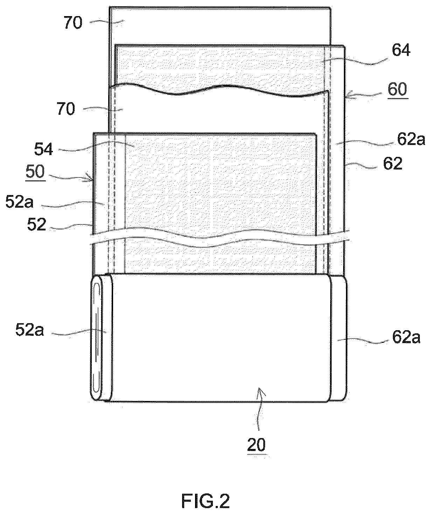

As shown in FIGS. 1 and 2, in the wound electrode body 20, a positive electrode sheet 50 and a negative electrode sheet 60 are overlapped with each other, with two long separator sheets 70 being interposed therebetween, and are wound in the longitudinal direction. The positive electrode sheet 50 has a configuration in which a positive electrode active material layer 54 is formed along the longitudinal direction on one side or both sides (here, both sides) of a long positive electrode current collector 52. The negative electrode sheet 60 has a configuration in which a negative electrode active material layer 64 is formed along the longitudinal direction on one side or both sides (here, both sides) of a long negative electrode current collector 62. A positive electrode active material layer non-formation portion 52a (that is, a portion where the positive electrode active material layer 54 is not formed and the positive electrode current collector 52 is exposed) and a negative electrode active material layer non-formation portion 62a (that is, a portion where the negative electrode active material layer 64 is not formed and the negative electrode current collector 62 is exposed) are formed so as to protrude outward from both ends of the wound electrode body 20 in the winding axis direction (that is, the sheet width direction orthogonal to the longitudinal direction). The positive electrode current collecting plate 42a and the negative electrode current collecting plate 44a are joined to the positive electrode active material layer non-formation portion 52a and the negative electrode active material layer non-formation portion 62a, respectively.

As the positive electrode current collector 52 constituting the positive electrode sheet 50, a known positive electrode current collector suitable for a lithium ion secondary battery may be used, and examples thereof include sheets or foils of metals having good conductivity (for example, aluminum, nickel, titanium, stainless steel, and the like). An aluminum foil is desirable as the positive electrode current collector 52.

The dimensions of the positive electrode current collector 52 are not particularly limited and may be determined, as appropriate, according to the battery design. When an aluminum foil is used as the positive electrode current collector 52, the thickness thereof is not particularly limited, but is, for example, 5 µm or more and 35 µm or less, and desirably 7 µm or more and 20 µm or less.

The positive electrode active material layer 54 includes a positive electrode active material. As the positive electrode active material, at least the positive electrode active material according to the present embodiment described above is used. The content of the positive electrode active material is not particularly limited, but is desirably 70% by mass or more, more desirably 80% by mass or more, and even more desirably 85% by mass or more in the positive electrode active material layer 54 (that is, with respect to the total mass of the positive electrode active material).

The positive electrode active material layer 54 may include a component other than the positive electrode active material. Examples thereof include lithium phosphate (Li₃PO₄), a conductive materials, a binder, and the like.

The content of lithium phosphate in the positive electrode active material layer 54 is not particularly limited, but is desirably 1% by mass or more and 15% by mass or less, and more desirably 2% by mass or more and 12% by mass or less.

As the conductive material, for example, carbon black such as acetylene black (AB) and other carbon materials (for example, graphite and the like) can be desirably used. The content of the conductive material in the positive electrode active material layer 54 is not particularly limited, but is, for example, 0.1% by mass or more and 20% by mass or less, desirably 1% by mass or more and 15% by mass or less, and more desirably 2% by mass or more and 10% by mass or less.

As the binder, for example, polyvinylidene fluoride (PVdF) or the like can be used. The content of the binder in the positive electrode active material layer 54 is not particularly limited, but is, for example, 0.5% by mass or more and 15% by mass or less, desirably 1% by mass or more and 10% by mass or less, and more desirably 1.5% by mass or more and 8% by mass or less.

The thickness of the positive electrode active material layer 54 is not particularly limited, but is, for example, 10 µm or more and 300 µm or less, and desirably 20 µm or more and 200 µm or less.

As the negative electrode current collector 62 constituting the negative electrode sheet 60, a known negative electrode current collector suitable for a lithium ion secondary battery may be used, and examples thereof include sheets or foils of metals having good conductivity (for example, copper, nickel, titanium, stainless steel, and the like). A copper foil is desirable as the negative electrode current collector 62.

The dimensions of the negative electrode current collector 62 are not particularly limited and may be determined, as appropriate, according to the battery design. When a copper foil is used as the negative electrode current collector 62, the thickness thereof is not particularly limited, but is, for example, 5 µm or more and 35 µm or less, and desirably 7 µm or more and 20 µm or less.

The negative electrode active material layer 64 includes a negative electrode active material. As the negative electrode active material, for example, a carbon material such as graphite, hard carbon, or soft carbon can be used. The graphite may be natural graphite or artificial graphite, or may be amorphous carbon-coated graphite in which graphite is coated with an amorphous carbon material.

The average particle diameter (median diameter D50) of the negative electrode active material is not particularly limited, but is, for example, 0.1 µm or more and 50 µm or less, desirably 1 µm or more and 25 µm or less, and more desirably 5 µm or more and 20 µm or less.

The content of the negative electrode active material in the negative electrode active material layer is not particularly limited, but is desirably 90% by mass or more, and more desirably 95% by mass or more.

The negative electrode active material layer 64 may include a component other than the negative electrode active material, such as a binder and a thickener.

As the binder, for example, styrene butadiene rubber (SBR) and a modification product thereof, acrylonitrile butadiene rubber and a modification product thereof, acrylic rubber and a modification product thereof, fluororubber, and the like can be used. Of these, SBR is desirable. The content of the binder in the negative electrode active material layer 64 is not particularly limited, but is desirably 0.1% by mass or more and 8% by mass or less, and more desirably 0.2% by mass or more and 3% by mass or less.

As the thickener, for example, a cellulosic polymer such as carboxymethyl cellulose (CMC), methyl cellulose (MC), cellulose acetate phthalate (CAP), hydroxypropyl methyl cellulose (HPMC); polyvinyl alcohol (PVA), or the like can be used. Of these, CMC is desirable. The content of the thickener in the negative electrode active material layer 64 is not particularly limited, but is desirably 0.3% by mass or more and 3% by mass or less, and more desirably 0.4% by mass or more and 2% by mass or less.

The thickness of the negative electrode active material layer 64 is not particularly limited, but is, for example, 10 µm or more and 300 µm or less, and desirably 20 µm or more and 200 µm or less.

The separator 70 can be exemplified by a porous sheet (film) made of a resin such as polyethylene (PE), polypropylene (PP), a polyester, cellulose, a polyamide, and the like. Such a porous sheet may have a single-layer structure or a laminated structure of two or more layers (for example, a three-layer structure in which PP layers are laminated on both sides of a PE layer). A heat-resistant layer (HRL) may be provided on the surface of the separator 70.

The thickness of the separator 70 is not particularly limited, but is, for example, 5 µm or more and 50 µm or less, and desirably 10 µm or more and 30 µm or less.

The non-aqueous electrolyte typically includes a non-aqueous solvent and an electrolyte salt (in other words, a supporting salt). As the non-aqueous solvent, various organic solvents such as carbonates, ethers, esters, nitriles, sulfones, and lactones suitable for the electrolytic solution of a general lithium ion secondary battery can be used without particular limitation. Of these, carbonates are desirable, and specific examples thereof include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyldifluoromethyl carbonate (F-DMC), trifluorodimethyl carbonate (TFDMC), and the like. Such non-aqueous solvents can be used singly or by combining, as appropriate, two or more types thereof.

As the electrolyte salt, for example, a lithium salt such as LiPF₆, LiBF₄, lithium bis(fluorosulfonyl)imide (LiFSI), and the like can be used, and LiPF₆ is particularly desirable. The concentration of the electrolyte salt is not particularly limited, but is desirably 0.7 mol/L or more and 1.3 mol/L or less.

The non-aqueous electrolyte may include various additives as components other than the above-mentioned components, for example, a film-forming agent such as an oxalate complex; a gas generating agent such as biphenyl (BP) and cyclohexylbenzene (CHB); a thickener; and the like as long as the effects of the present disclosure are not significantly impaired.

The lithium ion secondary battery 100 has an advantage of being excellent in high-temperature storage characteristic. Therefore, the lithium ion secondary battery 100 has excellent resistance to aging.

The lithium ion secondary battery 100 can be used for various purposes. Suitable applications include a drive power supply mounted on a vehicle such as a battery electric vehicle (BEV), a hybrid electric vehicle (HEV), and a plug-in hybrid electric vehicle (PHEV). Further, the lithium ion secondary battery 100 can be used as a storage battery of a small power storage device or the like. The lithium ion secondary battery 100 can also be used in a form of a battery pack which typically consists of a plurality of batteries connected in series and/or in parallel.

Up to the above, an angular lithium ion secondary battery provided with a flat wound electrode body has been described by way of an example. However, the positive electrode active material according to the present embodiment can also be used for other types of lithium ion secondary batteries according to a known method. For example, using the positive electrode active material according to the present embodiment, a lithium ion secondary battery including a stacked-type electrode body (that is, an electrode body in which a plurality of positive electrodes and a plurality of negative electrodes are alternately laminated) can be constructed. Further, using the positive electrode active material according to the present embodiment, a cylindrical lithium ion secondary battery, a coin type lithium ion secondary battery, a laminate-cased lithium ion secondary battery, and the like can also be constructed. Furthermore, it is also possible to construct an all-solid-state secondary battery in which the electrolyte is a solid electrolyte.

Hereinafter, examples relating to the present disclosure will be described, but the present disclosure is not intended to be limited to matters shown in such examples.

Preparation of Positive Electrode Active Material

### Example 1

A composite hydroxide including nickel, cobalt, and manganese at a molar ratio of 5 : 2 : 3 (that is, Ni_{0.5}Co_{0.2}Mn_{0.3}(OH)₂) was obtained as a precursor by a crystallization method using nickel sulfate, cobalt sulfate, and manganese sulfate as raw materials according to a conventional procedure. The average particle diameter of this composite hydroxide was 7 µm.

Ni_{0.5}Co_{0.2}Mn_{0.3}(OH)₂ having the average particle diameter of 7 µm, Li₂CO₃ and LiCl were mixed at mass ratios of 71 : 28 : 1. The obtained mixture was fired at 900°C for 24 hours in an air atmosphere to obtain a positive electrode active material.

### Example 2

The prepared Ni_{0.5}Co_{0.2}Mn_{0.3}(OH)₂ having the average particle diameter of 7 µm, Li₂CO₃ and LiCl were mixed at mass ratios of 71 : 21 : 8. The obtained mixture was fired at 900°C for 30 hours in an air atmosphere to obtain a positive electrode active material.

### Example 3

The prepared Ni_{0.5}Co_{0.2}Mn_{0.3}(OH)₂ having the average particle diameter of 7 µm, Li₂CO₃ and LiCl were mixed at mass ratios of 71 : 5 : 24. The obtained mixture was fired at 900°C for 40 hours in an air atmosphere to obtain a positive electrode active material.

### Example 4

The prepared Ni_{0.5}Co_{0.2}Mn_{0.3}(OH)₂ having the average particle diameter of 7 µm, Li₂CO₃ and LiCl were mixed at mass ratios of 71 : 20 : 9. The obtained mixture was fired at 920°C for 5 hours in an air atmosphere to obtain a positive electrode active material.

### Example 5

The prepared Ni_{0.5}Co_{0.2}Mn_{0.3}(OH)₂ having the average particle diameter of 7 µm, Li₂CO₃ and LiCl were mixed at mass ratios of 71 : 23 : 6. The obtained mixture was fired at 880°C for 30 hours in an air atmosphere to obtain a positive electrode active material.

### Example 6

The prepared Ni_{0.5}CO_{0.2}Mn_{0.3}(OH)₂ having the average particle diameter of 7 µm, Li₂CO₃ and LiCl were mixed at mass ratios of 71 : 23 : 6. The obtained mixture was fired at 900°C for 20 hours in an air atmosphere to obtain a positive electrode active material.

### Example 7

The prepared Ni_{0.5}Co_{0.2}Mn_{0.3}(OH)₂ having the average particle diameter of 7 µm, Li₂CO₃ and LiCl were mixed at mass ratios of 71 : 20 : 9. The obtained mixture was fired at 900°C for 35 hours in an air atmosphere to obtain a positive electrode active material.

### Example 8

The prepared Ni_{0.5}Co_{0.2}Mn_{0.3}(OH)₂ having the average particle diameter of 7 µm, Li₂CO₃ and LiCl were mixed at mass ratios of 71 : 19 : 10. The obtained mixture was fired at 900°C for 40 hours in an air atmosphere to obtain a positive electrode active material.

### Example 9

The prepared Ni_{0.5}Co_{0.2}Mn_{0.3}(OH)₂ having the average particle diameter of 7 µm, Li₂CO₃ and LiCl were mixed at mass ratios of 71 : 18 : 11. The obtained mixture was fired at 900°C for 45 hours in an air atmosphere to obtain a positive electrode active material.

### Example 10

A positive electrode active material was obtained by the same method as in Example 7 except that Ni_{0.5}Co_{0.2}Mn_{0.3}(OH)₂ prepared by the same method as described above and having an average particle diameter of 2 µm was used.

### Example 11

A positive electrode active material was obtained by the same method as in Example 7 except that Ni_{0.5}Co_{0.2}Mn_{0.3}(OH)₂ prepared by the same method as described above and having an average particle diameter of 3 µm was used.

### Example 12

A positive electrode active material was obtained by the same method as in Example 7 except that Ni_{0.5}Co_{0.2}Mn_{0.3}(OH)₂ prepared by the same method as described above and having an average particle diameter of 5 µm was used.

### Example 13

A positive electrode active material was obtained by the same method as in Example 7 except that Ni_{0.5}Co_{0.2}Mn_{0.3}(OH)₂ prepared by the same method as described above and having an average particle diameter of 10 µm was used.

### Example 14

Ni_{0.5}Co_{0.2}Mn_{0.3}(OH)₂ prepared by the same method as described above and having an average particle diameter 5 µm, Li₂CO₃, LiCl, and H₃BO₃ were mixed at mass ratios of 71 : 21 : 8 : 0.1 (conversion to B). The obtained mixture was fired at 900°C for 30 hours in an air atmosphere to obtain a positive electrode active material.

### Example 15

Ni_{0.5}Co_{0.2}Mn_{0.3}(OH)₂ prepared by the same method as described above and having an average particle diameter 5 µm, Li₂CO₃, LiCl, and H₃BO₃ were mixed at mass ratios of 71 : 22 : 7 : 0.5 (conversion to B). The obtained mixture was fired at 900°C for 25 hours in an air atmosphere to obtain a positive electrode active material.

### Example 16

Ni_{0.5}Co_{0.2}Mn_{0.3}(OH)₂ prepared by the same method as described above and having an average particle diameter 5 µm, Li₂CO₃, LiCl, and H₃BO₃ were mixed at mass ratios of 71 : 23 : 6 : 1.0 (conversion to B). The obtained mixture was fired at 900°C for 20 hours in an air atmosphere to obtain a positive electrode active material.

### Example 17

Ni_{0.5}Co_{0.2}Mn_{0.3}(OH)₂ prepared by the same method as described above and having an average particle diameter 5 µm, Li₂CO₃, LiCl, H₃BO₃, and NaOH were mixed at mass ratios of 71 : 24 : 5 : 0.5 (conversion to B) : 0.1 (conversion to Na). The obtained mixture was fired at 900°C for 15 hours in an air atmosphere to obtain a positive electrode active material.

### Example 18

Nio ₅Co_{0.2}Mn_{0.3}(OH)₂ prepared by the same method as described above and having an average particle diameter 5 µm, Li₂CO₃, LiCl, H₃BO₃, and NaOH were mixed at mass ratios of 71 : 25 : 4 : 0.5 (conversion to B) : 0.5 (conversion to Na). The obtained mixture was fired at 900°C for 10 hours in an air atmosphere to obtain a positive electrode active material.

### Example 19

Ni_{0.5}Co_{0.2}Mn_{0.3}(OH)₂ prepared by the same method as described above and having an average particle diameter 5 µm, Li₂CO₃, LiCl, H₃BO₃, and NaOH were mixed at mass ratios of 71 : 26 : 3 : 1.0 (conversion to B) : 1.0 (conversion to Na). The obtained mixture was fired at 900°C for 15 hours in an air atmosphere to obtain a positive electrode active material.

### Comparative Example 1

The prepared Ni_{0.5}Co_{0.2}Mn_{0.3}(OH)₂ having the average particle diameter of 7 µm and Li₂CO₃ were mixed at a mass ratio of 71 : 29. The obtained mixture was fired at 950°C for 5 hours in an air atmosphere to obtain a positive electrode active material.

### Comparative Example 2

The prepared Ni_{0.5}Co_{0.2}Mn_{0.3}(OH)₂ having the average particle diameter of 7 µm and LiCl were mixed at a mass ratio of 69 : 31. The obtained mixture was fired at 900°C for 50 hours in an air atmosphere to obtain a positive electrode active material.

### Comparative Example 3

The prepared Ni_{0.5}Co_{0.2}Mn_{0.3}(OH)₂ having the average particle diameter of 7 µm, Li₂CO₃ and LiCl were mixed at mass ratios of 71 : 19 : 10. The obtained mixture was fired at 940°C for 3 hours in an air atmosphere to obtain a positive electrode active material.

### Comparative Example 4

The prepared Ni_{0.5}Co_{0.2}Mn_{0.3}(OH)₂ having the average particle diameter of 7 µm, Li₂CO₃ and LiCl were mixed at mass ratios of 71 : 24 : 5. The obtained mixture was fired at 860°C for 40 hours in an air atmosphere to obtain a positive electrode active material.

### Comparative Example 5

The prepared Ni_{0.5}Co_{0.2}Mn_{0.3}(OH)₂ having the average particle diameter of 7 µm, Li₂CO₃ and NH₄Cl were mixed at mass ratios of 71 : 29 : 23. The obtained mixture was fired at 940°C for 5 hours in an air atmosphere to obtain a positive electrode active material.

### Comparative Example 6

The prepared Ni_{0.5}Co_{0.2}Mn_{0.3}(OH)₂ having the average particle diameter of 7 µm and Li₂CO₃ were mixed at a mass ratio of 71 : 29. The obtained mixture was fired at 900°C for 20 hours in an air atmosphere. Then, 8% by mass of NH₄Cl was mixed with the obtained firing product, followed by heat treatment at 400°C for 20 hours to obtain a positive electrode active material.

### Comparative Example 7

A composite hydroxide including nickel, cobalt, and manganese at a molar ratio of 5 : 2 : 3 (that is, Ni_{0.5}Co_{0.2}Mn_{0.3}(OH)₂) was obtained as a precursor by a crystallization method using nickel chloride, cobalt chloride, and manganese sulfate as raw materials according to a conventional procedure. The average particle diameter of this composite hydroxide was 7 µm.

Ni_{0.5}Co_{0.2}Mn_{0.3}(OH)₂ having the average particle diameter of 7 µm and Li₂CO₃ were mixed at a mass ratio of 71 : 29. The obtained mixture was fired at 940°C for 5 hours in an air atmosphere to obtain a positive electrode active material.

### Powder X-ray Diffraction Measurement of Positive Electrode Active Material

The prepared positive electrode active materials of each of the Examples and Comparative Examples were analyzed using the XRD apparatus "smart Lab" (manufactured by Rigaku Corp.) and the analysis software "PDXL2" (manufactured by Rigaku Corp.), and the ratio [(003) plane/(104) plane] of the peak intensity of the (003) plane to the peak intensity of the (104) plane in the Miller indexes hlk was determined. In addition, the crystallite size was determined using the full width at half maximum of the (003) plane, the 2θ value, and the Scherrer equation. The results are shown in Table 1.

### Measurement of Content of Added Elements in Positive Electrode Active Material

The contents of Cl, B, and Na contained in the prepared positive electrode active materials of each of the Examples and Comparative Examples were determined as % by mass by inductively coupled plasma (ICP) emission spectroscopic analysis. The results are shown in Table 1.

### Measurement of Average Particle Diameter of Positive Electrode Active Material

The SEM images of the particles of the prepared positive electrode active material of each of the Examples and Comparative Examples were acquired, the particle diameters of 100 arbitrarily selected particles were obtained, and the average value was calculated using image analysis software. The results are shown in Table 1.

### Production of Lithium Ion Secondary Battery for Evaluation

A paste for forming a positive electrode active material layer was prepared by mixing the positive electrode active material of each of the Examples and Comparative Examples, acetylene black (AB) as a conductive material, and polyvinylidene fluoride (PVDF) as a binder at mass ratios of the positive electrode active material AB : PVDF = 85 : 10 : 5 in N-methylpyrrolidone (NMP). The paste was applied onto an aluminum foil having a thickness of 15 µm and dried to prepare a positive electrode sheet.

A paste for forming a negative electrode active material layer was prepared by mixing natural graphite (C) as a negative electrode active material, styrene butadiene rubber (SBR) as a binder, and carboxymethyl cellulose (CMC) as a thickener at mass ratios of C : SBR : CMC = 98 : 1 : 1 in ion-exchanged water. This paste was applied onto a copper foil having a thickness of 10 µm and dried to prepare a negative electrode sheet.

Further, as a separator sheet, a porous polyolefin sheet having a thickness of 20 µm with a three-layer structure of PP/PE/PP was prepared.

The positive electrode sheet, negative electrode sheet, and separator sheet were overlapped with each other, electrode terminals were attached, and the resultant was accommodated in a laminated case. Subsequently, a non-aqueous electrolytic solution was injected into the laminated case, and the laminated case was hermetically sealed. The non-aqueous electrolyte solution was prepared for use by dissolving LiPF₆ as a supporting salt at a concentration of 1.0 mol/L in a mixed solvent including ethylene carbonate (EC), dimethyl carbonate (DMC) and ethyl methyl carbonate (EMC) in a volume ratio of 3 : 4 : 3. An evaluation lithium ion secondary battery of each Example and each Comparative Example having a capacity of 10 mAh was obtained in the above-described manner.

### High-Temperature Storage Test

First, each evaluation lithium ion secondary battery was adjusted to a SOC (State of charge) of 50%, and then placed in an environment of 25°C. Discharge was performed for 10 sec with a current value of 100 mA, a voltage value was measured after 10 sec from the start of discharge, and the initial battery resistance value (initial resistance) was calculated.

Next, each evaluation lithium ion secondary battery was adjusted to a SOC of 100% and then allowed to stand in an environment of 60°C for 30 days. After that, the resistance value was calculated by the same method as the initial resistance. The resistance increase rate was calculated from the battery resistance after high-temperature storage/initial resistance. The results are shown in Table 1.

[Table 1]

**Table 1**

| | Chlorine source | Content of Cl (% by mass) | Content of B (% by mass) | Content of Na (% by mass) | (003)/(104) peak intensity ratio | (003) crystallite size (Å) | Average particle diameter (µm) | Resistance increase rate after high-temperature storage |
|---|---|---|---|---|---|---|---|---|
| Example 1 | LiCl | 0.1 | 0 | 0 | 1 | 900 | 7 | 1.43 |
| Example 2 | LiCl | 1 | 0 | 0 | 1 | 900 | 7 | 1.38 |
| Example 3 | LiCl | 3 | 0 | 0 | 1 | 900 | 7 | 1.43 |
| Example 4 | LiCl | 1 | 0 | 0 | 0.8 | 900 | 7 | 1.43 |
| Example 5 | LiCl | 1 | 0 | 0 | 1.5 | 900 | 7 | 1.43 |
| Example 6 | LiCl | 1 | 0 | 0 | 1 | 800 | 7 | 1.38 |
| Example 7 | LiCl | 1 | 0 | 0 | 1 | 1000 | 7 | 1.35 |
| Example 8 | LiCl | 1 | 0 | 0 | 1 | 1400 | 7 | 1.35 |
| Example 9 | LiCl | 1 | 0 | 0 | 1 | 1500 | 7 | 1.38 |
| Example 10 | LiCl | 1 | 0 | 0 | 1 | 1000 | 2 | 1.35 |
| Example 11 | LiCl | 1 | 0 | 0 | 1 | 1000 | 3 | 1.32 |
| Example 12 | LiCl | 1 | 0 | 0 | 1 | 1000 | 5 | 1.32 |
| Example 13 | LiCl | 1 | 0 | 0 | 1 | 1000 | 10 | 1.35 |
| Example 14 | LiCl | 1 | 0.1 | 0 | 1 | 1000 | 5 | 1.28 |
| Example 15 | LiCl | 1 | 0.5 | 0 | 1 | 1000 | 5 | 1.28 |
| Example 16 | LiCl | 1 | 1 | 0 | 1 | 1000 | 5 | 1.32 |
| Example 17 | LiCl | 1 | 0.5 | 0.1 | 1 | 1000 | 5 | 1.20 |
| Example 18 | LiCl | 1 | 0.5 | 0.5 | 1 | 1000 | 5 | 1.20 |
| Example 19 | LiCl | 1 | 0.5 | 1 | 1 | 1000 | 5 | 1.28 |
| Comparative Example 1 | 1 | 0 | 0 | 0 | 1 | 900 | 7 | 1.50 |
| Comparative Example 2 | LiCl | 4 | 0 | 0 | 1 | 900 | 7 | 1.50 |
| Comparative Example 3 | LiCl | 1 | 0 | 0 | 0.7 | 900 | 7 | 1.50 |
| Comparative Example 4 | LiCl | 1 | 0 | 0 | 1.6 | 900 | 7 | 1.50 |
| Comparative Example 5 | NH₄Cl | 0 | 0 | 0 | 1.6 | 900 | 7 | 1.50 |
| Comparative Example 6 | NH₄Cl | 1 | 0 | 0 | 1.6 | 900 | 7 | 1.50 |
| Comparative Example 7 | NiCl₂, CoCl₂ | 1 | 0 | 0 | 1.6 | 900 | 7 | 1.50 |

From the results shown in Table 1, it can be seen that when the content of Cl is 0.1% by mass or more and 3% by mass or less, and the ratio of the peak intensity of the (003) plane to the peak intensity of the (104) plane is 0.8 or more and 1.5 or less, the resistance increase is small. In particular, Comparative Example 6 and Comparative Example 7 correspond to the chlorine-containing positive electrode active material of the related art, but due to the difference in the chlorine introduction method, there is a difference in the value of the ratio of the peak intensity of the (003) plane to the peak intensity of the (104) plane, and it can be seen that with the method of the related art, solid dissolution of CI does not proceed. As a result, it can be seen that the resistance increase is large in Comparative Example 6 and Comparative Example 7 corresponding to the related art. Therefore, it can be seen that the positive electrode active material disclosed herein can impart excellent high-temperature storage characteristics to a lithium ion secondary battery.

Although specific examples of the present disclosure have been described in detail above, these are merely examples and do not limit the scope of claims. The techniques described in the claims include various modifications and changes of the specific examples illustrated above.

## Claims

1. A positive electrode active material comprising 0.1% by mass or more and 3% by mass or less of CI, wherein
the ratio of a peak intensity of a (003) plane to a peak intensity of a (104) plane in Miller indexes hlk that is determined by powder X-ray diffraction is 0.8 or more and 1.5 or less.

2. The positive electrode active material according to claim 1, wherein a crystallite size of the (003) plane is 1000 Å or more and 1400 Å or less.

3. The positive electrode active material according to claim 1 or 2, wherein an average particle diameter is 3 µm or more and 5 µm or less.

4. The positive electrode active material according to any one of claims 1 to 3, further comprising 0.1% by mass or more and 0.5% by mass or less of B.

5. The positive electrode active material according to any one of claims 1 to 4, further comprising 0.1% by mass or more and 0.5% by mass or less of Na.

6. A lithium ion secondary battery (100) comprising a positive electrode (50) and a negative electrode (60), wherein
the positive electrode (50) includes the positive electrode active material according to any one of claims 1 to 5.

7. A method for producing the positive electrode active material according to claim 1, the method comprising:
a step of preparing a mixture of a hydroxide including a metal element, other than lithium, that constitutes a positive electrode active material, and a lithium source including lithium chloride, and
a step of firing the mixture at a temperature of 880°C or higher and 920°C or lower.
